# EUROPEAN PATENT APPLICATION

(11) **EP 2 103 211 A1**
(43) Date of publication of application: **23.09.2009**
(21) Application number: 08005236.8
(22) Date of filing: 20.03.2008
(51) Int. Cl.: A01N 25/30, A01N 57/20

(54) **Adjuvant compositions**

(71) Applicant: Cognis IP Management GmbH, 40589 Düsseldorf (DE)
(72) Inventor: Marques, Maria Da Silva, FR- 77000 Vaux Le Penil (FR); Merlet, Stéphanie, DE-40547 Düsseldorf (DE); Abribat, Benoit, FR-77310 Saint Fargeau Ponthierry (FR)
(74) Representative: Reinhardt, Jürgen

(57) **Abstract**

Suggested are adjuvant compositions, comprising
(a) Alk(en)yl oligoglycoside alkoxylates and
(b) Primary alcohol alkoxylates.

The compositions exhibit improved adjuvant activity for biocides in general and glyphosate in particular. They are environmentally safe, show high cold water miscibility and low foam behaviour.

## Description

### Field of the invention

The present invention is related to the area of agriculture and refers to new adjuvant compositions comprising two types of non-ionic surfactants.

### Background of the invention

The crop protection market represents a total value of around €22 billion/year. By far the largest single biocides are glyphosate-based compositions, which account for approximately 15% of the total market. In the past four years, with the extended cultivation of GMO crops, glyphosate-based product sales have grown by 12%/year and they reached a value of €3.4 billion in 2005. It has been calculated that around 250,000 tons of various glyphosate formulations are sprayed on crops every year. Most glyphosate-based herbicides are formulated with adjuvants (also known as potentiators) to maximise their efficacy by fulfilling several functions. An adjuvant must provide good wetting of the leaf surface, facilitate the foliar penetration of the biocide under a wide range of climatic conditions and enhance, or at least not inhibit, translocation of the biocide, in particular the herbicide into the plant. In addition, it must not produce phytotoxic effects when used on specific resistant crops. Tallow amine ethoxylates are most frequently used as adjuvants with biocides, in particular as adjuvants for glyphosates. These are mixtures of ethoxylated long-chain alkyl amines derived from fatty acids. The amounts of biocides and tallow amine ethoxylates used have changed little over the last few years and, despite concerns over eye irritation and eco-toxicity label ratings ("WARNING" or "DANGER"), they continue to be used. Alternative adjuvant chemistries, such as phosphate esters, are available.

European patent EP 0688165 B1 (KVK Agro) relates to a stable concentrated herbicide suspension containing high amounts of electrolytes and herbicide in finely divided form, which dissolves easily on dilution for spray. The compositions may contain alkoxylated alkyloligoglycosides. European patent EP 1063883 B1 (Dow Agrosciences) refers to the use of alkoxylated alkyl oligoglycosides in compositions comprising pesticides which are insoluble or very little soluble in water. The use of alkyl polyglucosides containing EO-units as adjuvants for pesticides is also known from US 6,746,988 (Syngenta), however, these compounds are obtained by acetalisation of ethoxylated fatty alcohols with glucose, thus the polyether chain links the fatty alcohol and the glucose part of the molecule. International patent application WO 05/087785 A1 (Cognis) discloses an improved process for making ethoxylates of alkyl oligoglycosides and their use as adjuvants, in particular for glyphosate-based herbicides.

Nevertheless, the alternatives known from the state of the art do not achieve the level of weed control obtained with tallow amine ethoxylates in terms of price and performance and/or are very difficult to handle because of their physical properties, such as foam generation, low temperature behaviour, miscibility in cold water, gel formation and flocculation. It has therefore been the object of the present invention developing new adjuvants for biocides, in particular for glyphosate-based compositions showing improved performance, especially compared with tallow amine ethoxylates and - ethoxylated - alkyl oligoglycosides.

### Detailed description of the invention

The present invention refers to adjuvant compositions, comprising
(a) Alk(en)yl oligoglycoside alkoxylates and
(b) Primary alcohol alkoxylates.

Surprisingly it has been observed that the mixtures according to the present invention improves the activity of biocides in general and glyphosate in particular when compared with standard adjuvants like tallow amine ethoxylates, alkyl oligoglycosides or ethoxylated alkyl oligoglycosides alone. The mixtures also exhibit an improved cold water miscibility, cold temperature viscosity and reduced foaming.

### Alk(en)yl oliglycoside alkoxylates

Alkoxylation products of alkyl and alkenyl oligoglycosides are well known from the state of the art. For example, an improved process for obtaining these non-ionic surfactant is disclosed in WO 05/087785 A1 (Cognis), which is hereby incorporated by reference. Patent literature very often refers to "APG ethoxylates", however, these products usually represent acetalisation products of glucose and fatty alcohol ethoxylates, thus the polyether chain links the sugar and the fatty part of the molecule. It is explicitely stated that these types of surfactants are not covered by the phrase "Alk(en)yl oligoglycoside alkoxylates", since it is essential for the success of the technical teaching associated with the present invention, that alkoxylation takes place at the free hydroxyl groups of the sugar moiety in order to provide the beneficial effects within the blend. Therefore, compound (a) truly represent adducts of alkylene oxides to alk(en)yl oligoglycosides, and more particular adducts of ethylene oxide and/or propylene oxide to alk(en)yl oligoglycosides.

As far as the glycoside part of the molecule is concerned it may be derived from aldoses or ketoses containing 5 or 6 carbon atoms, preferably glucose. Accordingly, the preferred alkyl and/or alkenyl oligoglycosides (alkoxylates) are alkyl or alkenyl oligoglucoside (alkoxylate)s. The alk(en)yl oligoglycoside part according to the invention corresponds to formula **(I):**

**R¹O[G]ₚ** **(I)**

wherein R¹ is an alkyl or alkenyl radical having from 6 to 22 carbon atoms, G is a sugar unit having 5 or 6 carbon atoms and p is a number from 1 to 10. The index p in general formula **(I)** indicates the degree of oligomerisation (DP degree), i.e. the distribution of mono- and oligoglycosides, and is a number of 1 to 10. Whereas p in a given compound must always be an integer and, above all, may assume a value of 1 to 6, the value p for a certain alkyl oligoglycoside is an analytically determined calculated quantity which is mostly a broken number. Alk(en)yl oligoglycosides having an average degree of oligomerisation p of 1.1 to 3.0 are preferably used. Alk(en)yl oligoglycosides having a degree of oligomerisation below 1.7 and, more particularly, between 1.2 and 1.4 are preferred from the applicational point of view. The alkyl or alkenyl radical R¹ may be derived from primary alcohols containing 4 to 22 and preferably 8 to 16 carbon atoms. Typical examples are butanol, caproic alcohol, caprylic alcohol, capric alcohol, undecyl alcohol, lauryl alcohol, myristyl alcohol, cetyl alcohol, palmitoleyl alcohol, stearyl alcohol, isostearyl alcohol, oleyl alcohol, elaidyl alcohol, petroselinyl alcohol, arachyl alcohol, gadoleyl alcohol, behenyl alcohol, erucyl alcohol and technical mixtures thereof such as are formed, for example, in the hydrogenation of technical fatty acid methyl esters or in the hydrogenation of aldehydes from Roelen's oxo synthesis. Alkyl oligoglucosides based on hydrogenated C₈-C₁₆ coconut oil alcohol having a DP of 1 to 3 are preferred.

In a preferred embodiment of the present invention said alk(en)yl oligoglycoside alkoxylates represent adducts of on average 1 to 20, preferably 1 to 5 Moles ethylene oxide and/or propylene oxide to alk(en)yl oligoglucosides, preferably alkyl oligoglucosides. More particularly the alk(en)yl oligoglycoside alkoxylates represent adducts of on average 2 to 10 Moles ethylene oxide and 1 to 3 Moles propylene oxide to C₈-C₁₀ and/or C₁₂-C₁₄ alkyl oligoglucosides.

### Primary alcohol alkoxylates

Primary alcohol alkoxylates, forming compound (b), are well known as non-ionic surfactants derived from alkoxylation of long-chain petrochemical or oleochemical alcohols. Typically the compounds follow general formula **(II),**

**R²O(CH₂CHR³O)ₙH** **(II)**

in which R² stands for a linear or branched, saturated or unsaturated hydrocarbon radical having 4 to 22, preferably 12 to 22 and more preferably 16 to 18 carbon atoms and 0 or 1 to 3 double bonds, R³ represents either hydrogen or a methyl group and n stands for a number of 1 to 20, preferably 2 to 10. Typical examples are adducts of 1 to 20, preferably 2 to 10 Moles ethylene oxide and/or propylene oxide to butanol, pentanol, capryl alcohol, caprylyl alcohol, caprinyl alcohol, lauryl alcohol, myristyl alcohol, cetyl alcohol, stearyl alcohol, isostearyl alcohol, oleyl alcohol, linolyl alcohol, linolenyl alcohol, gadoleyl alcohol, arachidyl alcohol, behenyl alcohol, erucyl alcohol and their technical mixtures, like cocoyl alcohol or tallowyl alcohol. Also useful are petrochemical-based alcohols with odd carbon numbers, like for example the Dobanol types (Shell). The preferred primary alcohol alkoxylates represent adducts of on average 1 to 20 Moles ethylene oxide and/or propylene oxide to saturated or unsaturated fatty alcohols having 16 to 22 carbon atoms, and more particularly adducts of 5 to 15 Moles ethylene oxide to unsaturated alcohols having 16 to 22 carbon atoms. A typical example is oleyl alcohol + 10 EO.

### Adjuvant compositions

The compositions according to the present inventions may contain compounds (a) and (b) in weight ratios of 10:90 to 90:10, preferably 25:75 to 75:25 and more preferably 40:60 to 60:40. Usually these compositions represent aqueous solutions or pastes showing water contents of 10 to 90 % b.w., depending whether they should deal for making diluted or concentrated products. The composition may also contain organic co-solvents, like glycerol or propylene glycol in amounts up to 25 % b.w. The most preferred composition is a mixture consisting of about 55 to 65 % b.w. ethoxylated alkyl oligoglucosides, about 15 to 25 % b.w. oleyl alcohol+10EO and about 15 to 25 % b.w. glycerol under the condition that the amounts add to 100 % b.w.

### Industrial application

Another object of the present invention is directed to the use of compositions comprising
(a) Alk(en)yl oligoglycoside alkoxylates and
(b) Primary alcohol alkoxylates
in agriculture, in particular the invention covers also the use of said compositions as adjuvants and/or emulsifiers for biocides.

Finally, the invention also refers to a method for improving the growth of plants by applying a composition comprising at least one biocide and an adjuvant mixture, comprising
(a) Alk(en)yl oligoglycoside alkoxylates and
(b) Primary alcohol alkoxylates.

### Biocides

For preparing the end-composition, the blends according to the present invention are usually mixed with the respective biocide under vigorous stirring and optionally at elevated temperature. The nature of the biocides is not critical since it fully depends on the proposed application. The preferred biocides, however, are herbicides and among this group preferably glyphosates and glufosinates. Nevertheless, in the following various types of biocides are compiled which in general are all useful for the preparation of agricultural compositions, especially for crop protection:

A biocide (component b) is a chemical substance capable of killing different forms of living organisms used in fields such as medicine, agriculture, forestry, and mosquito control. Usually, biocides are divided into two sub-groups:
- pesticides, which includes fungicides, herbicides, insecticides, algicides, moluscicides, miticides and rodenticides, and
- antimicrobials, which includes germicides, antibiotics, antibacterials, antivirals, antifungals, antiprotozoals and antiparasites.

Biocides can also be added to other materials (typically liquids) to protect the material from biological infestation and growth. For example, certain types of quaternary ammonium compounds (quats) can be added to pool water or industrial water systems to act as an algicide, protecting the water from infestation and growth of algae.

### Pesticides

The U.S Environmental Protection Agency (EPA) defines a pesticide as "any substance or mixture of substances intended for preventing, destroying, repelling, or mitigating any pes".^{[1]} A pesticide may be a chemical substance or biological agent (such as a virus or bacteria) used against pests including insects, plant pathogens, weeds, mollusks, birds, mammals, fish, nematodes (roundworms) and microbes that compete with humans for food, destroy property, spread disease or are a nuisance. In the following examples, pesticides suitable for the agrochemical compositions according to the present invention are given:

### • Fungicides

A fungicide is one of three main methods of pest control - the chemical control of fungi in this case. Fungicides are chemical compounds used to prevent the spread of fungi in gardens and crops. Fungicides are also used to fight fungal infections. Fungicides can either be contact or systemic. A contact fungicide kills fungi when sprayed on its surface. A systemic fungicide has to be absorbed by the fungus before the fungus dies. Examples for suitable fungicides, according to the present invention, encompass the following species: (3-ethoxypropyl)mercury bromide, 2-methoxyethylmercury chloride, 2-phenylphenol, 8-hydroxyquinoline sulfate, 8-phenylmercurioxyquinoline, acibenzolar, acylamino acid fungicides, acypetacs, aldimorph, aliphatic nitrogen fungicides, allyl alcohol, amide fungicides, ampropylfos, anilazine, anilide fungicides, antibiotic fungicides, aromatic fungicides, aureofungin, azaconazole, azithiram, azoxystrobin, barium polysulfide, benalaxy,1 benalaxyl-M, benodanil, benomyl, benquinox, bentaluron, benthiavalicarb, benzalkonium chloride, benzamacril, benzamide fungicides, benzamorf, benzanilide fungicides, benzimidazole fungicides, benzimidazole precursor fungicides, benzimidazolylcarbamate fungicides, benzohydroxamic acid, benzothiazole fungicides, bethoxazin, binapacryl, biphenyl, bitertanol, bithionol, blasticidin-S, Bordeaux mixture, boscalid, bridged diphenyl fungicides, bromuconazole, bupirimate, Burgundy mixture, buthiobate, butylamine, calcium polysulfide, captafol, captan, carbamate fungicides, carbamorph, carbanilate fungicides, carbendazim, carboxin, carpropamid, carvone, Cheshunt mixture, chinomethionat, chlobenthiazone, chloraniformethan, chloranil, chlorfenazole, chlorodinitronaphthalene, chloroneb, chloropicrin, chlorothalonil, chlorquinox, chlozolinate, ciclopirox, climbazole, clotrimazole, conazole fungicides, conazole fungicides (imidazoles), conazole fungicides (triazoles), copper(II) acetate, copper(II) carbonate, basic, copper fungicides, copper hydroxide, copper naphthenate, copper oleate, copper oxychloride, copper(II) sulfate, copper sulfate, basic, copper zinc chromate, cresol, cufraneb, cuprobam, cuprous oxide, cyazofamid, cyclafuramid, cyclic dithiocarbamate fungicides, cycloheximide, cyflufenamid, cymoxanil, cypendazole, cyproconazole, cyprodinil, dazomet, DBCP, debacarb, decafentin, dehydroacetic acid, dicarboximide fungicides, dichlofluanid, dichlone, dichlorophen, dichlorophenyl, dicarboximide fungicides, dichlozoline, diclobutrazol, diclocymet, diclomezine, dicloran, diethofencarb, diethyl pyrocarbonate, difenoconazole, diflumetorim, dimethirimol, dimethomorph, dimoxystrobin, diniconazole, dinitrophenol fungicides, dinobuton, dinocap, dinocton, dinopenton, dinosulfon, dinoterbon, diphenylamine, dipyrithione, disulfiram, ditalimfos, dithianon, dithiocarbamate fungicides, DNOC, dodemorph, dodicin, dodine, DONATODINE, drazoxolon, edifenphos, epoxiconazole, etaconazole,etem, ethaboxam, ethirimol, ethoxyquin, ethylmercury 2,3-dihydroxypropyl mercaptide, ethylmercury acetate, ethylmercury bromide, ethylmercury chloride, ethylmercury phosphate, etridiazole, famoxadone, fenamidone, fenaminosulf, fenapanil, fenarimol, fenbuconazole, fenfuram, fenhexamid, fenitropan, fenoxanil, fenpiclonil, fenpropidin, fenpropimorph, fentin, ferbam, ferimzone, fluazinam, fludioxonil, flumetover, flumorph, fluopicolide, fluoroimide, fluotrimazole, fluoxastrobin, fluquinconazole, flusilazole, flusulfamide, flutolanil, flutriafol, folpet, formaldehyde, fosetyl, fuberidazole, furalaxyl, furametpyr, furamide fungicides, furanilide fungicides, furcarbanil, furconazole, furconazole-cis, furfural, furmecyclox, furophanate, glyodin, griseofulvin, guazatine, halacrinate, hexachlorobenzene, hexachlorobutadiene, hexachlorophene, hexaconazole, hexylthiofos, hydrargaphen, hymexazol, imazalil, imibenconazole, imidazole fungicides, iminoctadine, inorganic fungicides, inorganic mercury fungicides, iodomethane, ipconazole, iprobenfos, iprodione, iprovalicarb, isoprothiolane, isovaledione, kasugamycin, kresoxim-methyl, lime sulphur, mancopper, mancozeb, maneb, mebenil, mecarbinzid, mepanipyrim, mepronil, mercuric chloride, mercuric oxide, mercurous chloride, mercury fungicides, metalaxyl, metalaxyl-M, metam, metazoxolon, metconazole, methasulfocarb, methfuroxam, methyl bromide, methyl isothiocyanate, methylmercury benzoate, methylmercury dicyandiamide, methylmercury pentachlorophenoxide, metiram, metominostrobin, metrafenone, metsulfovax, milneb, morpholine fungicides, myclobutanil, myclozolin, N-(ethylmercury)-p-toluenesulphonanilide, nabam, natamycin, nitrostyrene, nitrothal-isopropyl, nuarimol, OCH, octhilinone, ofurace, organomercury fungicides, organophosphorus fungicides, organotin fungicides, orysastrobin, oxadixyl, oxathiin fungicides, oxazole fungicides, oxine copper, oxpoconazole, oxycarboxin, pefurazoate, penconazole, pencycuron, pentachlorophenol, penthiopyrad, phenylmercuriurea, phenylmercury acetate, phenylmercury chloride, phenylmercury derivative of pyrocatechol, phenylmercury nitrate, phenylmercury salicylate, phenylsulfamide fungicides, phosdiphen, phthalide, phthalimide fungicides, picoxystrobin, piperalin, polycarbamate, polymeric dithiocarbamate fungicides, polyoxins, polyoxorim, polysulfide fungicides, potassium azide, potassium polysulfide, potassium thiocyanate, probenazole, prochloraz, procymidone, propamocarb, propiconazole, propineb, proquinazid, prothiocarb, prothioconazole, pyracarbolid, pyraclostrobin, pyrazole fungicides, pyrazophos, pyridine fungicides, pyridinitril, pyrifenox, pyrimethanil, pyrimidine fungicides, pyroquilon, pyroxychlor, pyroxyfur, pyrrole fungicides, quinacetol, quinazamid, quinconazole, quinoline fungicides, quinone fungicides, quinoxaline fungicides, quinoxyfen, quintozene, rabenzazole, salicylanilide, silthiofam, simeconazole, sodium azide, sodium orthophenylphenoxide, sodium pentachlorophenoxide, sodium polysulfide, spiroxamine, streptomycin, strobilurin fungicides, sulfonanilide fungicides, sulfur, sultropen, TCMTB, tebuconazole, tecloftalam, tecnazene, tecoram, tetraconazole, thiabendazole, thiadifluor, thiazole fungicides, thicyofen, thifluzamide, thiocarbamate fungicides, thiochlorfenphim, thiomersal, thiophanate, thiophanate-methyl, thiophene fungicides, thioquinox, thiram, tiadinil, tioxymid, tivedo, tolelofos-methyl, tolnaftate, tolylfluanid, tolylmercury acetate, triadimefon, triadimenol, triamiphos, triarimol, triazbutil, triazine fungicides, triazole fungicides, triazoxide, tributyltin oxide, trichlamide, tricyclazole, tridemorph, trifloxystrobin, triflumizole, triforine, triticonazole, unclassified fungicides, undecylenic acid, uniconazole, urea fungicides, validamycin, valinamide fungicides, vinclozolin, zarilamid, zinc naphthenate, zineb, ziram, zoxamide and their mixtures.

### • Herbicides

An herbicide is a pesticide used to kill unwanted plants. Selective herbicides kill specific targets while leaving the desired crop relatively unharmed. Some of these act by interfering with the growth of the weed and are often based on plant hormones. Herbicides used to clear waste ground are nonselective and kill all plant material with which they come into contact. Herbicides are widely used in agriculture and in landscape turf management. They are applied in total vegetation control (TVC) programs for maintenance of highways and railroads. Smaller quantities are used in forestry, pasture systems, and management of areas set aside as wildlife habitat. In the following, a number of suitable herbicides are compiled:
○ 2,4-D, a broadleaf herbicide in the phenoxy group used in turf and in no-till field crop production. Now mainly used in a blend with other herbicides that act as synergists, it is the most widely used herbicide in the world, third most commonly used in the United States. It is an example of synthetic auxin (plant hormone).
○ Atrazine, a triazine herbicide used in corn and sorghum for control of broadleaf weeds and grasses. It is still used because of its low cost and because it works as a synergist when used with other herbicides, it is a photosystem II inhibitor.
○ Clopyralid, a broadleaf herbicide in the pyridine group, used mainly in turf, rangeland, and for control of noxious thistles. Notorious for its ability to persist in compost. It is another example of synthetic auxin.
○ Dicamba, a persistent broadleaf herbicide active in the soil, used on turf and field corn. It is another example of synthetic auxin.
○ Glyphosate, a systemic nonselective (it kills any type of plant) herbicide used in no-till burndown and for weed control in crops that are genetically modified to resist its effects. It is an example of a EPSPs inhibitor.
○ Imazapyr, a non-selective herbicide used for the control of a broad range of weeds including terrestrial annual and perennial grasses and broadleaved herbs, woody species, and riparian and emergent aquatic species.
○ Imazapic, a selective herbicide for both the pre- and post-emergent control of some annual and perennial grasses and some broadleaf weeds. Imazapic kills plants by inhibiting the production of branched chain amino acids (valine, leucine, and isoleucine), which are necessary for protein synthesis and cell growth.
○ Metoalachlor, a pre-emergent herbicide widely used for control of annual grasses in corn and sorghum; it has largely replaced atrazine for these uses.
○ Paraquat, a nonselective contact herbicide used for no-till burndown and in aerial destruction of marijuana and coca plantings. More acutely toxic to people than any other herbicide in widespread commercial use.
○ Picloram, a pyridine herbicide mainly used to control unwanted trees in pastures and edges of fields. It is another synthetic auxin.
○ Triclopyr.

### • Insecticides

An insecticide is a pesticide used against insects in all developmental forms. They include ovicides and larvicides used against the eggs and larvae of insects. Insecticides are used in agriculture, medicine, industry and the household. In the following, suitable insecticides are mentioned:
○ Chlorinated insecticides such as, for example, Camphechlor, DDT, Hexachlorocyclohexane, gamma-Hexachlorocyclohexane, Methoxychlor, Pentachlorophenol, TDE, Aldrin, Chlordane, Chlordecone, Dieldrin, Endosulfan, Endrin, Heptachlor, Mirex and their mixtures;
○ Organophosphorus compounds such as, for example, Acephate, Azinphos-methyl, Bensulide, Chlorethoxyfos, Chlorpyrifos, Chlorpyriphos-methyl, Diazinon, Dichlorvos (DDVP), Dicrotophos, Dimethoate, Disulfoton, Ethoprop, Fenamiphos, Fenitrothion, Fenthion, Fosthiazate, Malathion, Methamidophos, Methidathion, Methyl-parathion, Mevinphos, Naled, Omethoate, Oxydemeton-methyl, Parathion, Phorate, Phosalone, Phosmet, Phostebupirim, Pirimiphos-methyl, Profenofos, Terbufos, Tetrachlorvinphos, Tribufos, Trichlorfon and their mixture;
○ Carbamates such as, for example, Aldicarb, Carbofuran, Carbaryl, Methomyl, 2-(1-Methylpropyl)phenyl methylcarbamate and their mixtures;
○ Pyrethroids such as, for example, Allethrin, Bifenthrin, Deltamethrin, Permethrin, Resmethrin, Sumithrin, Tetramethrin, Tralomethrin, Transfluthrin and their mixtures;
○ Plant toxin derived compounds such as, for example, Derris (rotenone), Pyrethrum, Neem (Azadirachtin), Nicotine, Caffeine and their mixtures.

### • Rodenticides

Rodenticides are a category of pest control chemicals intended to kill rodents. Rodents are difficult to kill with poisons because their feeding habits reflect their place as scavengers. They would eat a small bit of something and wait, and if they do not get sick, they would continue eating. An effective rodenticide must be tasteless and odorless in lethal concentrations, and have a delayed effect. In the following, examples for suitable rodenticides are given:
○ Anticoagulants are defined as chronic (death occurs after 1 - 2 weeks post ingestion of the lethal dose, rarely sooner), single-dose (second generation) or multiple dose (first generation) cumulative rodenticides. Fatal internal bleeding is caused by lethal dose of anticoagulants such as brodifacoum, coumatetralyl or warfarin. These substances in effective doses are antivitamins K, blocking the enzymes K₁-2,3-epoxide-reductase (this enzyme is preferentially blocked by 4-hydroxycoumarin/4-hydroxythiacoumarin derivatives) and K₁-quinone-reductase (this enzyme is preferentially blocked by indandione derivatives), depriving the organism of its source of active vitamin K₁. This leads to a disruption of the vitamin K cycle, resulting in an inability of production of essential blood-clotting factors (mainly coagulation factors II (prothrombin), VII (proconvertin), IX (Christmas factor) and X (Stuart factor)). In addition to this specific metabolic disruption, toxic doses of 4-hydroxycoumarin/4-hydroxythiacoumarin and indandione anticoagulants are causing damage to tiny blood vessels (capillaries), increasing their permeability, causing diffuse internal bleedings (haemorrhagias). These effects are gradual; they develop in the course of days and are not accompanied by any nociceptive perceptions, such as pain or agony. In the final phase of intoxication the exhausted rodent collapses in hypovolemic circulatory shock or severe anemia and dies calmly. Rodenticidal anticoagulants are either first generation agents (4-hydroxycoumarin type: warfarin, coumatetralyl; indandione type: pindone, diphacinone, chlorophacinone), generally requiring higher concentrations (usually between 0.005 and 0.1%), consecutive intake over days in order to accumulate the lethal dose, poor active or inactive after single feeding and less toxic than second generation agents, which are derivatives of 4-hydroxycoumarin (difenacoum, brodifacoum, bromadiolone and flocoumafen) or 4-hydroxy-1-benzothiin-2-one (4-hydroxy-1-thiacoumarin, sometimes incorrectlly referred to as 4-hydroxy-1-thiocoumarin, for reason see heterocyclic compounds), namely difethialone. Second generation agents are far more toxic than first generation agents, they are generally applied in lower concentrations in baits (usually in the order of 0.001 - 0.005%), and are lethal after single ingestion of bait and are effective also against strains of rodents that have become resistant against first generation anticoagulants; thus the second generation anticoagulants are sometimes referred to as "superwarfarins". Sometimes, anticoagulant rodenticides are potentiated by an antibiotic, most commonly by sulfaquinoxaline. The aim of this association (e.g. warfarin 0.05% + sulfaquinoxaline 0.02%, or difenacoum 0.005% + sulfaquinoxaline 0.02% etc.) is that the antibiotic/bacteriostatic agent suppresses intestinal/gut symbiotic microflora that represents a source of vitamin K. Thus the symbiotic bacteria are killed or their metabolism is impaired and the production of vitamin K by them is diminuted, an effect which logically contributes to the action of anticoagulants. Antibiotic agents other than sulfaquinoxaline may be used, for example co-trimoxazole, tetracycline, neomycin or metronidazole. A further synergism used in rodenticidal baits is that of an association of an anticoagulant with a compound with vitamin D-activity, i.e. cholecalciferol or ergocalciferol (see below). A typical formula used is, e. g., warfarin 0.025 - 0.05% + cholecalciferol 0.01%. In some countries there are even fixed three-component rodenticides, i.e. anticoagulant + antibiotic + vitamin D, e. g. difenacoum 0.005% + sulfaquinoxaline 0.02% + cholecalciferol 0.01%. Associations of a second-generation anticoagulant with an antibiotic and/or vitamin D are considered to be effective even against the most resistant strains of rodents, though some second generation anticoagulants (namely brodifacoum and difethialone), in bait concentrations of 0.0025 - 0.005% are so toxic that no known resistant strain of rodents exists and even rodents resistant against any other derivatives are reliably exterminated by application of these most toxic anticoagulants.
   Vitamin K₁ has been suggested and successfully used as an antidote for pets or humans, which/who were either accidentally or intentionally (poison assaults on pets, suicidal attempts) exposed to anticoagulant poisons. In addition, since some of these poisons act by inhibiting liver functions and in progressed stages of poisoning, several blood-clotting factors as well as the whole volume of circulating blood lacks, a blood transfusion (optionally with the clotting factors present) can save a person's life who inadvertently takes them, which is an advantage over some older poisons.
○ Metal phosphides have been used as a means of killing rodents and are considered single-dose fast acting rodenticides (death occurs commonly within 1-3 days after single bait ingestion). A bait consisting of food and a phosphide (usually zinc phosphide) is left where the rodents can eat it. The acid in the digestive system of the rodent reacts with the phosphide to generate the toxic phosphine gas. This method of vermin control has possible use in places where rodents are resistant to some of the anticoagulants, particularly for control of house and field mice; zinc phosphide baits are also cheaper than most second-generation anticoagulants, so that sometimes, in cases of large infestation by rodents, their population is initially reduced by copious amounts of zinc phosphide bait applied, and the rest of the population that survived the initial fast-acting poison is then eradicated by prolonged feeding on anticoagulant bait. Inversely, the individual rodents that survived anticoagulant bait poisoning (rest population) can be eradicated by pre-baiting them with nontoxic bait for a week or two (this is important to overcome bait shyness, and to get rodents used to feeding in specific areas by offering specific food, especially when eradicating rats) and subsequently applying poisoned bait of the same sort as used for pre-baiting until all consumption of the bait ceases (usually within 2-4 days). These methods of alternating rodenticides with different modes of action provides a factual or an almost 100% eradication of the rodent population in the area if the acceptance/palatability of bait is good (i.e., rodents readily feed on it).
○ Phosphides are rather fast acting rat poisons, resulting in that the rats are dying usually in open areas instead of the affected buildings. Typical examples are aluminum phosphide (fumigant only), calcium phosphide (fumigant only), magnesium phosphide (fumigant only) and zinc phosphide (in baits). Zinc phosphide is typically added to rodent baits in amounts of around 0.75-2%. The baits have a strong, pungent garlic-like odor characteristic for phosphine liberated by hydrolysis. The odor attracts (or, at least, does not repulse) rodents, but has a repulsive effect on other mammals; birds, however (notably wild turkeys), are not sensitive to the smell and feed on the bait thus becoming collateral damage.
○ Hypercalcemia. Calciferols (vitamins D), cholecalciferol (vitamin D₃) and ergocalciferol (vitamin D₂) are used as rodenticides, which are toxic to rodents for the same reason that they are beneficial to mammals: they are affecting calcium and phosphate homeostasis in the body. Vitamins D are essential in minute quantities (few IUs per kilogram body weight daily, which is only a fraction of a milligram), and like most fat soluble vitamins they are toxic in larger doses as they readily result in the so-called hypervitaminosis, which is, simply said, poisoning by the vitamin. If the poisoning is severe enough (that is, if the dose of the toxicant is high enough), it eventually leads to death. In rodents consuming the rodenticidal bait it causes hypercalcemia by raising the calcium level, mainly by increasing calcium absorption from food, mobilising bone-matrix-fixed calcium into ionised form (mainly monohydrogencarbonate calcium cation, partially bound to plasma proteins, [CaHCO₃]⁺), which circulates dissolved in the blood plasma, and after ingestion of a lethal dose the free calcium levels are raised sufficiently so that blood vessels, kidneys, the stomach wall and lungs are mineralised/calcificated (formation of calcificates, crystals of calcium salts/complexes in the tissues thus damaging them), leading further to heart problems (myocard is sensitive to variations of free calcium levels that are affecting both myocardial contractibility and excitation propagation between atrias and ventriculas) and bleeding (due to capillary damage) and possibly kidney failure. It is considered to be single-dose, or cumulative (depending on concentration used; the common 0.075% bait concentration is lethal to most rodents after a single intake of larger portions of the bait), sub-chronic (death occurring usually within days to one week after ingestion of the bait). Applied concentrations are 0.075% cholecalciferol and 0.1% ergocalciferol when used alone. There is an important feature of calciferols toxicology which is that they are synergistic with anticoagulant toxicants. This means that mixtures of anticoagulants and calciferols in the same bait are more toxic than the sum of toxicities of the anticoagulant and the calciferol in the bait so that a massive hypercalcemic effect can be achieved by a substantially lower calciferol content in the bait and vice-versa. More pronounced anticoagulant/hemorrhagic effects are observed if calciferol is present. This synergism is mostly used in baits low in calciferol because effective concentrations of calciferols are more expensive than effective concentrations of most anticoagulants. The historically very first application of a calciferol in rodenticidal bait was, in fact, the Sorex product Sorexa® D (with a different formula than today's Sorexa® D) back in the early 1970's, containing warfarin 0.025% + ergocalciferol 0.1%. Today, Sorexa® CD contains a 0.0025% difenacoum + 0.075% cholecalciferol combination. Numerous other brand products containing either calciferols 0.075 - 0.1% (e. g. Quintox®, containing 0.075% cholecalciferol) alone, or a combination of calciferol 0.01 - 0.075% with an anticoagulant are marketed.

### • Miticides, moluscicides and nematicides

○ Miticides are pesticides that kill mites. Antibiotic miticides, carbamate miticides, formamidine miticides, mite growth regulators, organochlorine, permethrin and organophosphate miticides all belong to this category.
○ Molluscicides are pesticides used to control mollusks, such as moths, slugs and snails. These substances include metaldehyde, methiocarb and aluminium sulfate. A nematicide is a type of chemical pesticide used to kill parasitic nematodes (a phylum of worm).
○ A nematicide is obtained from a neem tree's seed cake; which is the residue of neem seeds after oil extraction. The neem tree is known by several names in the world but was first cultivated in India since ancient times.

### • Antimicrobials

In the following examples, antimicrobials suitable for agrochemical compositions according to the present invention are given. Bactericidal disinfectants mostly used are those applying
○ active chlorine (i.e., hypochlorites, chloramines, dichloroisocyanurate and trichloroisocyanurate, wet chlorine, chlorine dioxide, etc.),
○ active oxygen (peroxides such as peracetic acid, potassium persulfate, sodium perborate, sodium percarbonate and urea perhydrate),
○ iodine (iodpovidone (povidone-iodine, Betadine), Lugol's solution, iodine tincture, iodinated nonionic surfactants),
○ concentrated alcohols (mainly ethanol, 1-propanol, called also n-propanol and 2-propanol, called isopropanol and mixtures thereof; further, 2-phenoxyethanol and 1- and 2-phenoxypropanols are used),
○ phenolic substances (such as phenol (also called "carbolic acid"), cresols (called "Lysole" in combination with liquid potassium soaps), halogenated (chlorinated, brominated) phenols, such as hexachlorophene, triclosan, trichlorophenol, tribromophenol, pentachlorophenol, Dibromol and salts thereof),
○ cationic surfactants such as some quaternary ammonium cations (such as benzalkonium chloride, cetyl trimethylammonium bromide or chloride, didecyldimethylammonium chloride, cetylpyridinium chloride, benzethonium chloride) and others, non-quarternary compounds such as chlorhexidine, glucoprotamine, octenidine dihydrochloride, etc.),
○ strong oxidizers such as ozone and permanganate solutions;
○ heavy metals and their salts such as colloidal silver, silver nitrate, mercury chloride, phenylmercury salts, copper sulfate, copper oxide-chloride etc. Heavy metals and their salts are the most toxic and environmentally hazardous bactericides and, therefore, their use is strongly suppressed or forbidden; further, also
○ properly concentrated strong acids (phosphoric, nitric, sulfuric, amidosulfuric, toluenesulfonic acids) and
○ alcalis (sodium, potassium, calcium hydroxides) between pH < 1 or > 13, particularly below elevated temperatures (above 60°C) kill bacteria.

As antiseptics (i.e., germicide agents that can be used on human or animal body, skin, mucoses, wounds and the like), few of the above mentioned disinfectants can be used under proper conditions (mainly concentration, pH, temperature and toxicity toward man/animal). Among them, important are
○ Some properly diluted chlorine preparations (e. g. Daquin's solution, 0.5% sodium or potassium hypochlorite solution, pH-adjusted to pH 7 - 8, or 0.5 - 1% solution of sodium benzenesulfochloramide (chloramine B)), some
○ iodine preparations such as iodopovidone in various galenics (ointments, solutions, wound plasters), in the past also Lugol's solution,
○ peroxides as urea perhydrate solutions and pH-buffered 0.1 - 0.25% peracetic acid solutions,
○ alcohols with or without antiseptic additives, used mainly for skin antisepsis,
○ weak organic acids such as sorbic acid, benzoic acid, lactic acid and salicylic acid
○ some phenolic compounds such as hexachlorophene, triclosan and Dibromol, and
○ cation-active compounds such as 0.05 - 0.5% benzalkonium, 0.5 - 4% chlorhexidine, 0.1 - 2% octenidine solutions.

Bactericidal antibiotics kill bacteria; bacteriostatic antibiotics only slow down their growth or reproduction. Penicillin is a bactericide, as are cephalosporins. Aminoglycosidic antibiotics can act in both a bactericidic manner (by disrupting cell wall precursor leading to lysis) or bacteriostatic manner (by connecting to 30s ribosomal subunit and reducing translation fidelity leading to inaccurate protein synthesis). Other bactericidal antibiotics according to the present invention include the fluoroquinolones, nitrofurans, vancomycin, monobactams, co-trimoxazole, and metronidazole.

Greenhouse experiments were conducted to investigate the potency of the mixtures of alkoxylated oligoglycosides and alkoxylated primary alcohols as adjuvants for glyphosate. Winter wheat (*Triticum aestivum*) was used as a model for difficult-to-wet grasses and black nightshade (*Solanum nigrum*) was used as a model plant with an easy-to-wet, but difficult-to-penetrate, leaf surface. Both were grown in a growth chamber under 14 hours of light, at 18/12(±0.5)°C (day/night) temperature, and in 70/80(±5)% (day/night) relative humidity. Light was provided by high-pressure mercury lamps and fluorescent tubes to give 70 W/m² (PAR) at leaf level. The plants were grown in 11 cm diameter plastic pots filled with a mixture of sand and humic potting soil (1:2 by volume). The pots were placed on sub-irrigation matting which was wetted daily with half-strength nutrient solution. After emergence, the wheat seedlings were thinned to six plants/pot for the efficacy experiments. Black nightshade seedlings were thinned to one plant/pot. Black nightshade and wheat were treated at the three-and the four-leaf stage, respectively. The fresh weights of the plants were measured 14 days after treatment (DAT) for black nightshade and 21 DAT for wheat. The glyphosate solutions were applied with an air-pressured laboratory track sprayer with 1.2-mm nozzles fitted with a perforated (0.6 mm) whirling pin and delivering 200 L/ha at 303 kPa. Table 1 lists the adjuvants tested. These were added to the unformulated monoisopropylamine salt of glyphosate [MON 8717 (glyphosate IPA salt 648 gai/litre = 2.84 M without adjuvant)] at a concentration of 0.25% (w/v). Demineralised water was used as the carrier.

**Table 1:**

| Adjuvants tested with glyphosate (MON 8717) | |
|---|---|
| **Adjuvant** | **Composition** |
| TAMEO | Tallow amine+3EO |
| Agnique^{®} GPU | Tallow amine+20EO |
| Agnique^{®} PG | C₈-C₁₀ Alkyl oligoglycosides, DP =1,5 |
| Agnique^{®} PG 264-G5 | C₁₂-C₁₄Alkoxylated alkyl oligoglycosides+5EO, DP =1,5 |
| Agnique^{®} PG 8105-G10 | C₈-C₁₀ Alkoxylated alkyl oligoglycosides+10EO, DP =1,5 |
| Agnique^{®} PG 8105-G51 | C₈-C₁₀ Alkoxylated alkyl oligoglycosides+SEO+1PO, DP =1,5 |
| Agnique^{®} Blend A* | Agnique^{®} PG 8105-G10 + Oleyl alcohol+10EO |
| Agnique^{®} Blend B** | Agnique^{®} PG 264-G5 + Oleyl alcohol+10EO + Glycerol |
| Agnique^{®} Blend C** | Agnique^{®} PG 8105-G10 + Oleyl alcohol+10EO + Glycerol |
| Agnique^{®} Blend D** | Agnique^{®} PG 8105-G51 + Oleyl alcohol+10EO + Glycerol |

| | |
|---|---|
| *) Weight ratio: 70:30 **) 60:20:20 | |

### Examples 1 to 8, Comparative Examples C1 to C 12 Greenhouse experiments

A sub-optimal rate of glyphosate, giving (ideally) a 0-20% growth reduction without adjuvant, was used to demonstrate the adjuvants' effects. Based on previous work, these rates were 77.8 gae/hectare (equivalent to 2.3 mM at 200 litres/hectare) on wheat and 30.4 gae/hectare (equivalent to 0.9 mM) on black nightshade. The experiments were conducted as a randomised complete block with four replicates. Two separate experiments were conducted for each of the two plant species. The data was subjected to analysis of variance using the Genstat statistical package (Release 6.1 from Rothamsted Experimental Station). The fresh weight data is shown in Tables 2 and 3. The performance of the products on both species was expressed as a percentage of the FW of untreated plants. Examples 1 to 8 are according to the invention, examples C1 to C12 serve as comparison.

**Table 2:**

| Influence of adjuvants on glyphosate efficacy on black nightshade SOLNI (Solanum Nigrum) | | | | | | |
|---|---|---|---|---|---|---|
| **Ex.** | **Treatment** | **Adjuvants^{b}** | **Trial 1^{c}** g FW | **Trial 1 %** | **Trial 2^{d} g FW** | **Trial 2 %** |
| | None | None | 15.89 | 100 | 17.32 | 100 |
| | Gly^{a} | None | 5.59 | 35.1 | 14.66 | 84.5 |
| C1 | Gly | TAMEO | 0.75 | 4.7 | 3.46 | 19.9 |
| C2 | Gly | Agnique^{®} GPU | 1.68 | 10.6 | - | - |
| C3 | Gly | Agnique^{®} PG | 2.00 | 12.6 | 8.09 | 46.6 |
| C4 | Gly | Agnique^{®} PG 264-G5 | 2.43 | 15,3 | - | - |
| C5 | Gly | Agnique^{®} PG 8105-G10 | 1.60 | 10.1 | 5.17 | 29.8 |
| C6 | Gly | Agnique^{®} PG 8105-G51 | 1.85 | 11,7 | - | - |
| 1 | Gly | Agnique^{®} Blend A | 1.18 | 7.4 | 4.33 | 24.9 |
| 2 | Gly | Agnique^{®} Blend B | 1.66 | 10.5 | - | - |
| 3 | Gly | Agnique^{®} Blend C | 1.08 | 6.8 | - | - |
| 4 | Gly | Agnique^{®} Blend D | 1.48 | 9.3 | - | - |

| | | | | | | |
|---|---|---|---|---|---|---|
| ^{a} Gly = unformulated isopropylamine salt of glyphosate. ^{b} Each adjuvant was included at 0.25% w/v (2.5 g/L). ^{c}Trial 1= 0.9 mM glyphosate (equivalent to 30.4 g a.e./ha at 200 L/ha) ^{d}Trial 2= 0.6 mM glyphosate (equivalent to 20.3 g a.e./ha at 200 L/ha); | | | | | | |

**Table 3**

| Influence of adjuvants on glyphosate efficacy on wheat | | | | | | |
|---|---|---|---|---|---|---|
| **Ex.** | **Treatment** | **Adjuvant²** | **Trial I g FW** | **Trial 2 g FW** | **Average g FW** | **Average %** |
| | None | None | 26.58 | 19.27 | 22.92 | 100 |
| | Gly¹ | None | 22.33 | 13.97 | 18.15 | 78.3 |
| C7 | Gly | TAMEO | 2.49 | 3.05 | 2.77 | 12.6 |
| C8 | Gly | Agnique^{®} GPU | 1.93 | 2.13 | 2.03 | 8.9 |
| C9 | Gly | Agnique^{®} PG | 1.94 | 2.31 | 2.12 | 9.6 |
| C10 | Gly | Agnique^{®} PG 264-G5 | 2.65 | 3.57 | 3.11 | 14.3 |
| C11 | Gly | Agnique^{®} PG 8105-G10 | 2.26 | 2.40 | 2.33 | 10.2 |
| C12 | Gly | Agnique^{®} PG 8105-G51 | 2.76 | 2.60 | 2.68 | 11.7 |
| 5 | Gly | Agnique^{®} Blend A | 1.47 | 2.28 | 1.87 | 8.7 |
| 6 | Gly | Agnique^{®} Blend B | 1.80 | 1.39 | 1.60 | 7.0 |
| 7 | Gly | Agnique^{®} Blend C | 1.93 | 2.01 | 1.97 | 8.6 |
| 8 | Gly | Agnique^{®} Blend D | 2.08 | 1.94 | 2.01 | 8.8 |

| | | | | | | |
|---|---|---|---|---|---|---|
| 1 Gly = unformulated isopropylamine salt of glyphosate 2.3 mM (equivalent to 77.8 ga,e/ha at 200 L/ha) 2 Each adjuvant was included at 0.25% w/v (2.5 g/L) | | | | | | |

The examples and comparative examples demonstrate that mixtures of alkoxylated alkyl oligoglucosides and primary alcohol alkoxylates show superior performance in all trials compared to state of the art adjuvant like tallow amine ethoxylates, alkyl oligoglycosides or even alkoxylated alkyl oligoglycosides taken alone.

### Example 9, Comparative Examples C 13 to C16

### Physical properties

Apart from biological efficacy, there are physical properties that make certain chemistries more desirable in glyphosate formulations. These properties include cold water miscibility, cold temperature viscosity and low foaming. The cold water miscibility of the potentiators was observed by agitating 400 ml of cold water (0°C) with a 25 mm stir bar to create a 1 cm vortex. 40 grams of each surfactant were added at one go. The surfactant behaviour was observed and the time at which no striations remained was recorded in seconds.

Among the candidates ethoxylated tallow amine exhibits the poorest cold water miscibility (Table 4). All of the tallow amine ethoxylate introduced into the stirring water immediately collapsed onto itself, forming several large gelatinous masses. These masses broke up very slowly and tended to stick to the beaker walls rather than disperse.

**Table 4**

| Cold water miscibility observations and recorded time | | | | |
|---|---|---|---|---|
| **Ex.** | **Adjuvant** | **Gel formation** | **Glass clinging** | **Dissolution** time |
| C13 | Agnique^{®} PG | None | Slight | 45 sec |
| C14 | Agnique^{®} PG 264-G5 | None | None | 10 sec |
| 9 | Agnique^{®} Blend A | None | None | 8 sec |
| C15 | Agnique^{®} GPU | Yes | Considerable | >300 sec |
| C16 | C₈-C₁₀ Phosphate ester | No | Slight | 35 sec |

To overcome this deficiency, ethoxylated tallow amine must be formulated with anti-gelling agents. None of the other chemistries were observed to form gels, yet the APG and the 8-10 phosphate ester did show slight clinging to the bottom of the beaker. Both, the alkoxylated APG and the blend with oleyl alcohol+3EO dispersed immediately and never touched the glass surface in its concentrated form.

## Claims

1. Adjuvant compositions, comprising
(a) Alk(en)yl oligoglycoside alkoxylates and
(b) Primary alcohol alkoxylates.

2. Compositions according to Claim 1, **characterised in that** said alk(en)yl oligoglycoside alkoxylates (component a) represent adducts of alkylene oxides to alk(en)yl oligoglycosides.

3. Compositions according to Claims 1 and/or 2, **characterised in that** said alk(en)yl oligoglycoside alkoxylates represent adducts of ethylene oxide and/or propylene oxide to alk(en)yl oligoglycosides.

4. Compositions according to any of the preceding Claims 1 to 3, **characterised in that** said alk(en)yl oligoglycoside alkoxylates represent adducts of alkylene oxides to alk(en)yl oligoglycosides according to general formula (I),
**R¹O[G]ₚ** **(I)**
wherein R¹ is an alkyl or alkenyl radical having from 6 to 22 carbon atoms, G is a sugar unit having 5 or 6 carbon atoms and p is a number from 1 to 10.

5. Compositions according to any of the preceding Claims 1 to 4, **characterised in that** said alk(en)yl oligoglycoside alkoxylates represent adducts of on average 1 to 20 Moles ethylene oxide and/or propylene oxide to alk(en)yl oligoglucosides.

6. Compositions according to any of the preceding Claims 1 to 5, **characterised in that** said alk(en)yl oligoglycoside alkoxylates represent adducts of on average 2 to 10 Moles ethylene oxide and 1 to 3 Moles propylene oxide to C₈-C₁₀ and/or C₁₂-C₁₄ alkyl oligoglucosides.

7. Compositions according to any of the preceding Claims 1 to 6, **characterised in that** said primary alcohol alkoxylates (component b) follow general formula **(II),**
**R²O(CH₂CHR³O)ₙH** **(II)**
in which R² stands for a linear or branched, saturated or unsaturated hydrocarbon radical having 4 to 22 carbon atoms and 0 or 1 to 3 double bonds, R³ represents either hydrogen or a methyl group and n stands for a number of 1 to 20.

8. Compositions according to any of the preceding Claims 1 to 7, **characterised in that** said primary alcohol alkoxylates represent adducts of on average 1 to 20 Moles ethylene oxide and/or propylene oxide to saturated or unsaturated fatty alcohols having 16 to 22 carbon atoms.

9. Compositions according to any of the preceding Claims 1 to 8, **characterised in that** said primary alcohol alkoxylates represent adducts of 5 to 15 Moles ethylene oxide to unsaturated alcohols having 16 to 22 carbon atoms.

10. Compositions according to any of the preceding Claims 1 to 9, **characterised in that** said compounds (a) and (b) are present in a weight ratio of 10:90 to 90:10.

11. Use of compositions comprising
(a) Alk(en)yl oligoglycoside alkoxylates and
(b) Primary alcohol alkoxylates
in agriculture.

12. Use of compositions comprising
(a) Alk(en)yl oligoglycoside alkoxylates and
(b) Primary alcohol alkoxylates
as adjuvants and/or emulsifiers for biocides.

13. Use according to Claim 12, **characterised in that** said biocide is Glyphosate and Glufosinate.

14. A method for improving the growth of plants by applying a composition comprising at least one biocide and an adjuvant mixture, comprising
(c) Alk(en)yl oligoglycoside alkoxylates and
(d) Primary alcohol alkoxylates.
